# EUROPEAN PATENT SPECIFICATION

(11) **EP 3 598 204 B1**
(45) Date of publication and mention of the grant of the patent: **09.02.2022**
(21) Application number: 18768308.1
(22) Date of filing: 13.03.2018
(51) Int. Cl.: G02B 27/42, B42D 25/328, G02B 3/00, B42D 25/30, G02B 3/08, G02B 5/18, G07D 7/00, B42D 25/324, B42D 25/29, B42D 25/355, G03H 1/00, G07D 7/207, G07D 7/12, G03H 1/22

(54) **MICRO-OPTICAL SYSTEM FOR FORMING VISUAL IMAGES WITH KINEMATIC MOVEMENT EFFECTS**
MIKROOPTISCHES SYSTEM ZUR HERSTELLUNG VISUELLER BILDER MIT KINEMATISCHEN BEWEGUNGSEFFEKTEN
SYSTÈME MICRO-OPTIQUE POUR FORMER DES IMAGES VISUELLES À EFFETS DE MOUVEMENT CINÉMATIQUES

(30) Priority: 15.03.2017 EA 201700240
(43) Date of publication of application: 22.01.2020
(73) Proprietor: Computer Holography Centre Ltd, Zelenograd, Moscow 124460 (RU)
(72) Inventor: GONCHARSKIY, Alexander Vladimirovich, Moscow 117321 (RU); GONCHARSKIY, Anton Aleksandrovich, Moscow 117321 (RU); DURLEVICH, Svyatoslav Radomirovich, Moscow 119571 (RU); MELNIK, Dmitry Vladimirovich, Moscow 109125 (RU)
(74) Representative: Zaboliene, Reda
(86) International application number: PCT/RU2018/000156
(87) International publication number: WO 2018/169450

(56) References cited:
- WO-A1-2016/015973
- WO-A1-2017/220204
- CA-A1- 2 945 024
- EA-A1- 201 000 535
- EA-A1- 201 400 490
- RU-A- 2010 101 424
- RU-U1- 127 208
- US-B1- 6 243 202

## Description

Currently, various protection technologies are used to protect bank notes, securities, documents, and plastic cards against counterfeit. These include water marks, windowed threads, holograms, embedded LED elements varying the polarization of the incident light, latent images, etc. (van Renesse, Rudolf L, Optical Document Security, 3rd ed. British Library Cataloguing in Publication Data, 2005, ISBN 1-58053-258-6, van Renesse, Rudolf L, Optical Document Security, 2nd ed. British Library Cataloguing in Publication Data, 1998, ISBN 0-89006-982-4).

The microoptical system of the formation of visual images with kinematic effects of motion claimed as the invention belongs primarily to the type of devices used to establish the authenticity of products and can be efficiently used for protecting bank notes, securities, documents, plastic cards, and excise stamps.

Close patent bid to the claimed invention is patent bid of invention (CA2945024A1). In that patent bid the effects of visual kinematic motion is formed by concave or convex cylindrical elements. In our invention the effects of visual kinematic motion is formed by axial Fresnel lenses with parabolic phase functions.

Close patent bid to the claimed invention is patent bid of invention (WO 2016/015973A1). In that patent bid the effect of visual kinematic motion is formed by the coating composition comprising a plurality of magnetic or magnetizable pigment particles, which are oriented by external magnetic field.

Close patent to the claimed invention is patent of invention (US6243202B1). In that patent the effect of visual kinematic motion is formed by the grating structures comprised of grating lines. In the present invention the effects of visual kinematic motion is formed by axial Fresnel lenses with parabolic phase functions.

The closest patent to the claimed invention (prototype) in terms of the combination of features is patent of invention (EA017394(B1)). In that patent the effects of kinematic motion of fragments are formed by off-axis Fresnel lenses. When the microoptical system described in patent of invention (EA017394(B1)) is illuminated by a point light source the observer sees an image made up of dots. Every dot of the image is formed by an off-axis Fresnel lens with the preferred size ranging from 0.5 to 1.5 mm. The image may consist of digits, letters, or symbols. Images of letters and digits are formed using about ten Fresnel lenses, and this determines the minimum width of the security thread, which is equal to about 5 mm in the case of minimal diameter of lenses. In our prototype we propose to use off-axis Fresnel lenses with parabolic of saddle-shaped phase function. The use of Fresnel lenses with a parabolic or saddle-shaped phase function makes it possible to obtain various kinematic effected of motion of image fragments in response to the tilt of the optical element. We propose in the useful model (RU127208) a version of microoptical system as per patent (EA017394(B1)), where in the case of small diffraction angles the observer sees kinematic effects of motion of the fragments of the image made up of bright dots, and in the case of greater diffraction angles the observer sees a different color image over the entire area of the optical element.

The purpose of this invention is to extend, compared to the prototype, the capabilities of visual control to holographic threads with widths smaller than 5 mm. Currently, the overwhelming majority of threads used to protect bank notes and securities have widths smaller than 5 mm. Aim of the present invention is to extend the range of angles where kinematic effects of the motion of image fragments are observed when the optical element is tilted, and also to improve the protection of microoptical systems against counterfeit and limit the number of technologies that allow synthesizing the said visual effect.

The designated task of obtaining the designated technical result is achieved in the claimed microoptical system of the formation of visual images as per claim 1, which consists of flat diffractive optical element whose domain Q has the form of rectangle |x| ≤ Lₓ/2 |y| ≤ L_{y}/2 placed on flat base. Domain Q is subdivided into elementary areas Qᵢⱼ, each with a size no greater than 250 microns and centered on points (xᵢ,yⱼ), i = 1 ... N, j = 1 ... M. For each area Qij a flat optical element with phase function Φ(x,y), which at point of each elementary area Qij is calculated by formula Φ(x,y) = ϕᵢⱼ(x,y) · ψ(y), i = 1 ... N, j = 1 ... M, is computed and manufactured. Function ϕᵢⱼ(x,y) has the form of the phase function of an off-axis Fresnel lens centered on point (xᵢ,yⱼ), and computed by the formula ϕᵢⱼ(x,y) = C[(x-xᵢ)²+(y-yⱼ)²], where C is the given parameter. Function ψ(y) is a periodic extension of function Ψ̅ (y) defined over interval |y| ≤ T_{ψ}/2 so that Ψ̅ (y) equals 1 if |y| ≤ Δ/2, and 0 if |y| > Δ/2. The quantities T_{ψ} and Δ are specified parameters such that Δ/T_{ψ} ≤ ½, and the period T_{ϕ} of Fresnel lenses along the Oy axis, which is equal to T_{ϕ} = L_{y}/M, differs from the period T_{ψ} by no more than 5%. When the microoptical system is illuminated by a point light source then at diffraction angles smaller than 60° the observer sees over the entire area Q of the optical element an image consisting of black and white stripes, which changes if the optical element is tilted right/left within the tilt-angle interval -15°< β < 15°. The kinematic effect of motion consists in the motion of black and white stripes when the optical element is tilted up/down within the tilt-angle interval -30°< α < 30°.

The microoptical system as per claim 2 differs from the microoptical system as per claim 1 in that the area Q of the optical element where phase function Φ(x,y) is equal to zero is filled with diffraction gratings of various orientations and periods, which do not exceed 0.6 microns. When the microoptical system is illuminated by a point light source at diffraction angles smaller than 60° the observer sees over the entire Q area an image consisting of black and white stripes. Which does not change when the optical element is turned right/left within the tilt angle interval -15°< β < 15°. The kinematic effect of motion consists in the motion of black and white stripes when the optical element is tilted up/down within the tilt angle interval -30°< α < 30°. At diffraction angles greater than 60° the observer sees another color image.

The microoptical system as per claim 3 is a flat reflecting diffractive optical element with area Q in the form of a rectangle, |x| ≤ Lₓ/2, |y| ≤ L_{y}/2. Area Q contains two special non-overlapping subareas: area Q¹ consisting of points (x,y) of area Q with positive x coordinates, and area Q² consisting of points (x,y) of area Q with negative x coordinates. Each of the areas Q¹ and Q² is subdivided into elementary areas Q¹ᵢⱼ and Q²ᵢⱼ with the sizes no greater than 250 microns centered on points (xᵢ,yⱼ), i = 1 ... N/2, j = 1 ... M. For each area Q¹ᵢⱼ a flat optical element is calculated and manufactured with phase function Φ(x,y), which at point (x,y) of elementary area Q¹ᵢⱼ is computed by formula Φ(x,y) = ϕ⁺ᵢⱼ(x,y) · ψ(y), i = 1 ... N/2, j = 1 ... M, where ϕ⁺ᵢⱼ(x,y) is the phase function of a concave axial Fresnel lens centered on point (xᵢ,yⱼ) and computed by formula ϕ⁺ᵢⱼ(x,y) = C[(x-xᵢ)²+(y-yⱼ)²], where C is a given positive parameter. For each area Q²ᵢⱼ a flat optical element is calculated and manufactured with phase function Φ(x,y), which st point (x,y) of elementary area Q²ᵢⱼ is computed by formula Φ(x,y) = ϕ⁻ij(x,y) · ψ(y), i = 1 ... N/2, j = 1 ... M, where ϕ⁻ᵢⱼ(x,y) is the phase function of a convex Fresnel lens centered on point (xᵢ,yⱼ) computed by formula ϕ⁻ᵢⱼ(x,y) = C[(x-xᵢ)²+(y-yⱼ)²], where C is a given negative parameter. Function ψ(y) defined over the entire area Q is the periodic extension of function ψ̅ (y) defined on the interval |y| ≤ T_{ψ}/2 so that ψ̅ (y) equals 1 if |y| ≤ Δ/2 and equals 0 if |y| > Δ/2. Here T_{ψ} and Δ are the given parameters such that Δ/T_{ψ} ≤ ½. The period T_{ϕ} of Fresnel lenses along the Oy axis, which is equal to T_{ϕ} = L_{y}/M, differs from period T_{ψ} by no more than 5%. When the microoptical system is illuminated by a point light source at diffraction angles smaller than 60° the observer sees in areas Q¹ and Q² images made up of black and white stripes, which do not change when the optical element is turned right/left within the tilt angle interval -15°< β < 15°. The kinematic effect consists in the motion of black and white stripes when the optical element is tilted up/down in the tilt angle interval -30°< α < 30°, and black and white stripes in areas Q¹ and Q² move in opposite directions.

The microoptical system as per claim 4 differs from the microoptical system as per claim 3 in that the area Q of the optical element where phase function Φ(x,y) is equal to zero is filled with diffraction gratings of various orientations and periods, which do not exceed 0.6 microns. When the microoptical system is illuminated by a point light source at diffraction angles smaller than 60° the observer sees in areas Q¹ and Q² images consisting of black and white stripes, which do not change if the optical element is turned right/left within the turn angle interval -15°< β < 15°. The kinematic effect of consists in the motion of black and white stripes when the optical element is tilted up/down within the tilt angle interval -30°< α < 30°, and the stripes in areas Q¹ and Q² move in opposite directions. At diffraction angles greater than 60° the observer sees a different image.

The microoptical system as per claim 5 is a flat reflecting diffractive optical element with area Q in the form of a rectangle, |x| ≤ Lₓ/2, |y| ≤ L_{y}/2. Area Q contains two special non-overlapping subareas: area Q¹ consisting of points (x,y) of area Q with positive x coordinates, and area Q² consisting of points (x,y) of area Q with negative x coordinates. Each of the areas Q¹ and Q² is subdivided into elementary areas Q¹ᵢⱼ and Q²ᵢⱼ with the sizes no greater than 250 microns centered on points (xᵢ,yⱼ), i = 1 ... N/2, j = 1 ... M. For each area Q¹ᵢⱼ a flat optical element is calculated and manufactured with phase function Φ(x,y), which at point (x,y) of elementary area Q¹ᵢⱼ is computed by formula Φ(x,y) = ϕᵢⱼ(x,y) · ψ₁(y), i = 1 ... N/2, j = 1 ... M. For each area Q²ᵢⱼ a flat optical element is calculated and manufactured with phase function Φ(x,y), which at point (x,y) of elementary area Q²ᵢⱼ is computed by formula Φ(x,y) = ϕᵢⱼ(x,y) · ψ₂(y), i = 1 ... N/2, j = 1 ... M. Here ϕᵢⱼ(x,y) is the phase function of an axial Fresnel lens centered on point (xᵢ,yⱼ) computed by formula ϕ⁻ᵢⱼ(x,y) = C[(x-xᵢ)²+(y-yⱼ)²], where C is a given parameter. Function ψ₁(y) defined over area Q¹ is the periodic extension of function ψ̅₁(y) defined on the interval |y| ≤ T_{ψ1}/2 so that ψ̅₁(y) equals 1 if |y| ≤ Δ₁/2 and equals 0 if |y| > Δ₁/2. Function ψ₂(y) defined over area Q² is the periodic extension of function ψ̅₂(y) defined on the interval |y| ≤ T_{ψ2}/2 so that ψ̅₂(y) equals 1 if |y| ≤ Δ₂/2 and equals 0 if |y| > Δ₂/2. Here T_{ψ1}, T_{ψ2}, Δ₁ and Δ₂ are the given parameters such that Δ₁/T_{ψ1} ≤ ½ and Δ₂/T_{ψ2} ≤ ½. The period T_{ϕ} of Fresnel lenses along the Oy axis, which is equal to T_{ϕ} = L_{y}/M, differs from the periods T_{ψ1} and T_{ψ2} by no more than 5%. When the microoptical system is illuminated by a point light source at diffraction angles smaller than 60° the observer sees in areas Q¹ and Q² images made up of black and white stripes, which do not change when the optical element is turned right/left within the tilt angle interval -15°< β < 15°. The kinematic effect consists in the motion of black and white stripes when the optical element is tilted up/down in the tilt angle interval -30°< α < 30°, and black and white stripes in areas Q¹ and Q² move in opposite directions.

The microoptical system as per claim 6 differs from the microoptical system as per claim 5 in that the area Q of the optical element where phase function Φ(x,y) is equal to zero is filled with diffraction gratings of various orientations and periods, which do not exceed 0.6 microns. When the microoptical system is illuminated by a point light source at diffraction angles smaller than 60° the observer sees in areas Q¹ and Q² images consisting of black and white stripes, which do not change if the optical element is turned right/left within the turn angle interval -15°< β < 15°. The kinematic effect consists in the motion of black and white stripes when the optical element is tilted up/down in the tilt angle interval -30°< α < 30°, and black and white stripes in areas Q¹ and Q² move in opposite directions. In the case of diffraction angles greater than 60° the observer sees a different color image.

The essence of the invention is explained by the images. Here Fig. 1 shows the domain where the optical element is defined; Fig. 2 shows the scheme of the partition of the optical element into elementary areas Qij; Fig. 3 shows the structure of the axial Fresnel lens in area Qij; Fig. 4 shows the phase functions ϕ⁺(y) and ϕ⁻(y) of the axial Fresnel lenses; Fig. 5 shows the binary version of the phase function ϕ(y) of the axial Fresnel lens; Fig. 6 shows the plot of function ψ̅(y); Fig. 7 shows the plot of function ψ(y); Fig. 8 shows schematically the mutual positions of the light source and the observer with respect to the microoptical system; Fig. 9 shows the scheme of observation of the microoptical system in the case where the optical element is tilted up/down by angle α; Fig. 10 shows the variants of the images formed by the microoptical system as per claims 1 and 2 for two different diffraction angles smaller than 60°; Fig. 11 shows the scheme of observation of the microoptical system in the case of diffraction angles θ > 60; Fig. 12 shows the variant of the color image seen by the observer at diffraction angles greater than 60°; Fig. 13 shows the variants of the partitioning of the optical element Q into areas Q¹ 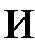 Q²; Fig. 14 shows variants of images formed by the microoptical system as per claims 3 - 6 at diffraction angles smaller than 60°; Fig. 15 shows a fragment of the structure of the microrelief of the microoptical system as per claim 4; Fig. 16 shows the plots of functions ψ₁(y) and ψ₂(y) as per claims 5 and 6; Fig. 17 shows a fragment of the structure of the microrelief of the microoptical system as per claim 6; Fig. 18 shows an example of the partition of a 4.5 mm wide security thread into areas Q¹ and Q²; Fig. 19 shows images seen by the observer at diffraction angles smaller than 60° (a) and greater than 60° (b) for a 4.5 mm wide security thread.

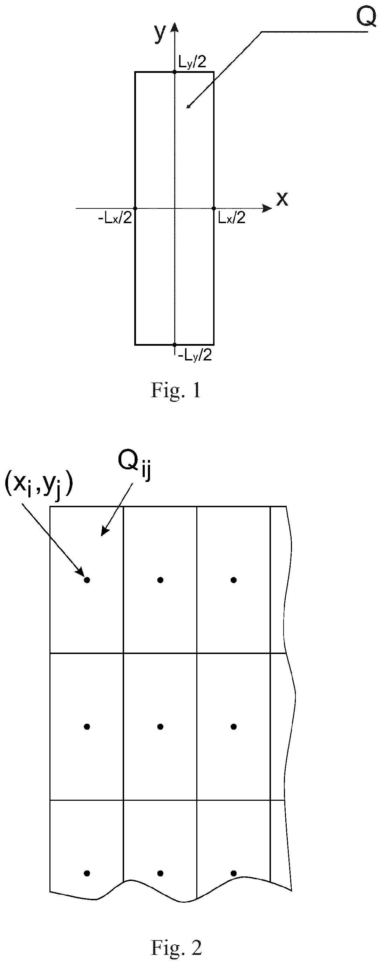

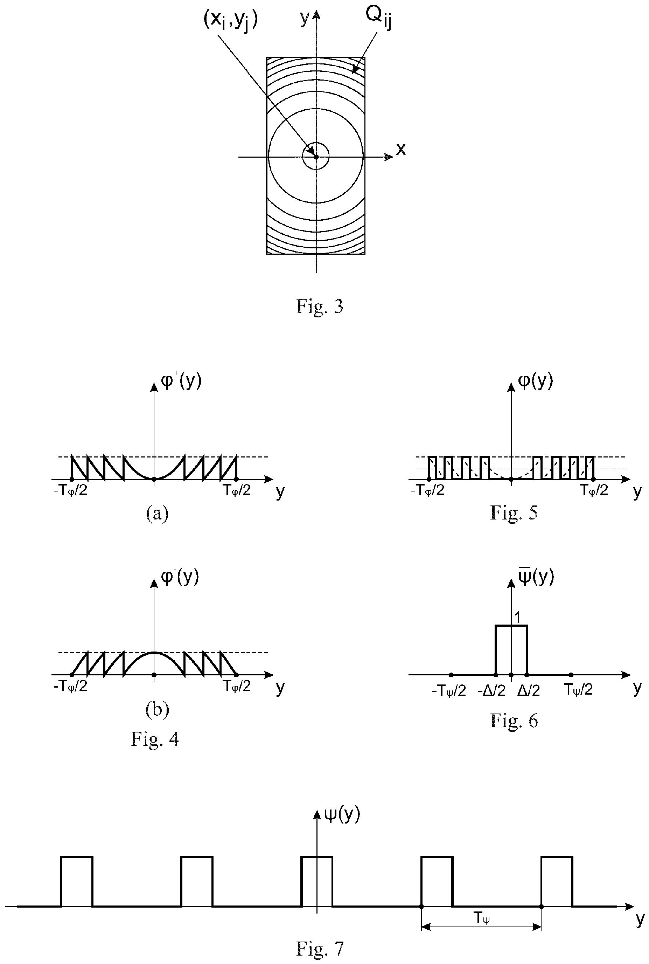

The microoptical system claimed in this invention is a flat optical phase element consisting of multilevel diffraction elements - axial Fresnel lenses and diffraction gratings. Fig. 1 shows area Q where the optical element as per claims 1-6 is defined. Area Q has the form of an Lₓ × L_{y} rectangle centered on the origin of the Cartesian coordinate system Oxy. Fig. 2 shows the partition scheme of the optical element into elementary areas Qij. The center of each elementary area Qij is located at the point with the coordinates (xᵢ,yⱼ). The sizes of the elementary areas do not exceed 250 microns. In the preferred variant of the image the rectangle is elongate along the Oy axis, i.e., L_{y} > Lₓ. The microoptical system is formed using axial Fresnel lenses. Fig. 3 shows schematically the mutual positions of the Fresnel lenses in elementary areas Qij. The solid lines show the contours of the phase function. We use the functions ϕ⁺(x,y) and ϕ⁻(x,y) defined by the formula ϕ(x,y) = C·(x²+y²), where C is the given parameter as the phase functions for concave and convex lenses, respectively. Function ϕ⁺(x,y) corresponds to parameter C > 0, and function ϕ⁻(x,y) corresponds to parameter C < 0. Fig. 4 shows the cross sections of functions ϕ⁺(x,y) and ϕ⁻(x,y) at x = 0. The phase functions shown in Fig. 4 correspond to multilevel phase elements (A.V. Goncharsky and A.A. Goncharsky, Computer Optics and Computer Holography, Moscow: Moscow University Press, 2004, ISBN 5-211-04902-0). This is the preferred variant for the formation of microoptical systems in accordance with the claimed invention. Fig. 5 shows the variant of a binary phase element. Unlike the phase function of a multilevel flat optical element the phase function of a binary optical element takes only two values. Only multilevel axial Fresnel lenses with a parabolic function are used in all claims.

For the formation of the visual image seen at diffraction angles smaller than 60° binary function ψ(y) is introduced, which is equal to the periodic extension of function ψ̅(y) shown in Fig. 6. Function ψ̅(y) is defined on the [-T_{ψ}/2, T_{ψ}/2] segment. Function ψ̅(y) equals 1 on the [-Δ/2, Δ/2] segment. Outside this segment function ψ̅(y) equals 0. The parameters Δ and T_{ψ} are specified. Another important parameter is the period T_{ϕ} of the arrangement of axial Fresnel lenses along the Oy axis. Parameter T_{ϕ} is computed as T_{ϕ} = L_{y}/M. Fig. 7 shows the plot of function ψ(y). Function ψ(y) is periodic with the period equal to T_{ψ}. The periods T_{ϕ} and T_{ψ} for microoptical systems as per claims 1, 2, 3, and 4 must satisfy the following relations:
1. The periods T_{ϕ} and T_{ψ} must differ from each other.
2. The difference between T_{ϕ} and T_{ψ} must not be greater than 5%.

The conditions are essential for the realization of the claimed microoptical systems as per claims 1-6. For example, if T_{ϕ} coincides with T_{ψ} then it will be impossible to form an image consisting of black and white stripes at diffraction angles θ < 60°. In the case of a large difference between T_{ϕ} and T_{ψ} the kinematic effect of the motion of stripes is very small.

The phase function Φ(x,y) of microoptical systems as per claims 1 and 2 at point (x,y) of each elementary area Qij can be computed by formula Φ(x,y) = ϕᵢⱼ(x,y) · ψ(y), i = 1 ... N, j = 1 ... M. Phase function Φ(x,y) uniquely determines the microrelief of the flat optical element in area Q. Given the phase function it is possible to compute the depth of the microrelief at each point (x, y) of area Q. The depth of the microrelief for a reflecting diffractive optical element in the case when light is normally incident onto the optical element can be computed as h(x,y) = 0,5 ϕ(x,y). (A.V. Goncharsky and A.A. Goncharsky, Computer Optics and Computer Holography, Moscow: Moscow University Press, 2004, ISBN 5-211-04902-0).

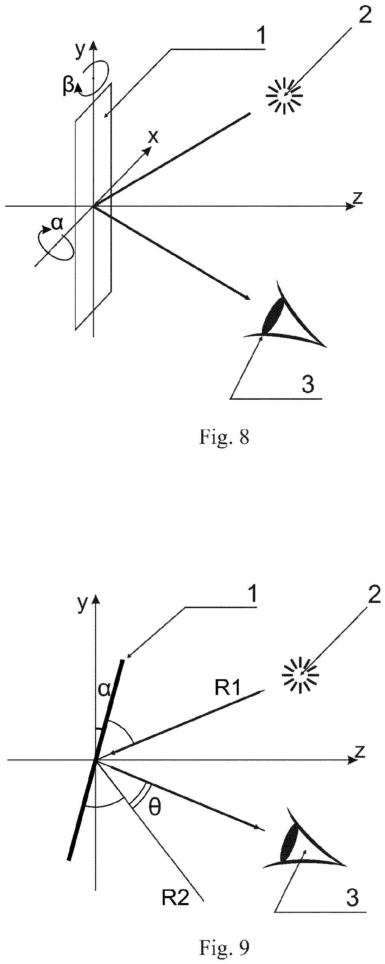

Fig. 8 shows schematically the arrangement of microoptical system 1 relative to the Oxy plane. The microoptical system is illuminated by point light source 2 located in the Oyz plane. The optical element may turn about the Ox axis by angle α. Let us denote the turn angle of the optical element about the Oy axis as β. The eye of the observer is located in the Oyz plane. The optical element is turned up/down about the Ox axis and left/right about the Oy axis.

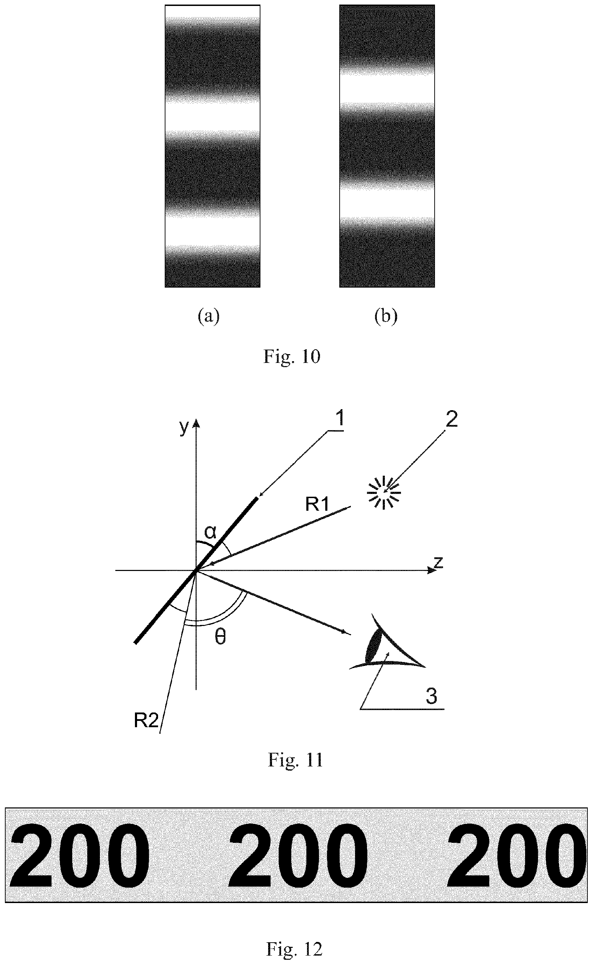

Fig. 9 shows the scheme of observation for microoptical system 1 in the range of diffraction angles smaller than 60°. Diffraction angle θ is measured as the angle between the zero order of diffraction denoted as ray R2 in Fig. 9 and the direction toward observer's eye 3. The direction of ray R2 coincides with the direction of the ray from light source 2 reflected from the optical element (ray R1) if the phase function of the optical element is constant, i.e., if the optical element is a mirror. By changing the tilt of the optical element relative to the Oy axis (angle α) we change the angle of diffraction θ(α) = 2α. If the optical element is tilted at angle α < 30° then the diffraction angle does not exceed 60°. At diffraction angles smaller than 60° the observer sees over the entire area Q of the optical element the image formed by the microoptical system as per claims 1, 2 consisting of horizontal black and white stripes with the kinematic effect of motion, which appears when the optical element is tilted up/down. Fig. 10 shows two images seen by the observer at different angles θ smaller than 60°. The images in Fig. 10(a) and 10(b) correspond to the angles θ₁ = 20° and θ₂ = 30°, respectively.

The image at diffraction angles smaller than 60° is formed via fragments of axial Fresnel lenses with a parabolic phase function. The size of the outermost Fresnel zones is an important parameter characterizing flat axial Fresnel lenses. In the preferred version of the invention the size of the outermost Fresnel zones does not exceed 1.2 microns. Because the size of rectangular Fresnel lenses does not exceed 250 microns and the size of the outermost Fresnel zones does not exceed 1.2 microns the lens produces a horizontally wide directivity diagram of the light reflected from the microoptical system. Fresnel lenses form an image consisting of horizontal black and white stripes, which does not change if the optical element is turned about the Oy axis left/right by angles β lying within the ±15° interval. The kinematic effect consists in the motion of black-and-white stripes when the microoptical system is tilted up/down by angles within the ±30° interval.

Fragments of Fresnel lenses cannot be seen by human eye because their size does not exceed 250 microns, which makes the claimed invention essentially different from the prototype where the diameter of Fresnel lenses in the preferred variant ranges from 0.5 to 1.5 mm. the chosen parameters make it possible to form an image, which, unlike that of the prototype, does not consist of isolated points but has the form of solid bright black and white strips, which move in the vertical direction when the optical element is tilted up/down. An essential difference from the prototype is that the claimed microoptical system uses multilevel optical elements as Fresnel lenses. It because of the use of multilevel optical elements that the behavior of the motion of stripes does not change across the zero order of diffraction, which corresponds to the transition from positive angles of the tilt of the optical element, α > 0, to negative angles α < 0.

The microoptical system as per claim 2 differs from the microoptical system as per claim 1 in that area Q of the optical element where the phase function Φ(x,y) equals zero is filled with diffraction gratings of various orientations and various periods, which do not exceed 0.6 microns. When the microoptical system is illuminated by a point light source at diffraction angles smaller than 60°the observer sees an image consisting of black and white stripes with the same kinematic effect of motion as in the case of the multilevel system as per claim 1. At diffraction angles greater than 60° the observer sees another color image.

Fig. 11 shows the observation scheme of the microoptical system art large diffraction angles θ > 60°. Like in Fig. 9, diffraction angle θ is measured as the angle between the direction toward the observer 3 and the zero order of diffraction R2. Figs. 9 and 11 differ only by the value of angle α. Large tilts of the optical element correspond to large angles α and hence to large diffraction angles θ. The parameters of the microrelief of the microoptical system are chosen so that at diffraction angles greater than 60° the image is formed by diffraction gratings. The sizes of diffraction gratings do not exceed 200 microns and therefore grating fragments cannot be seen by the observer. Fig. 12 shows a variant of such a color image in representative colors. Black and gray correspond to green and red color, respectively.

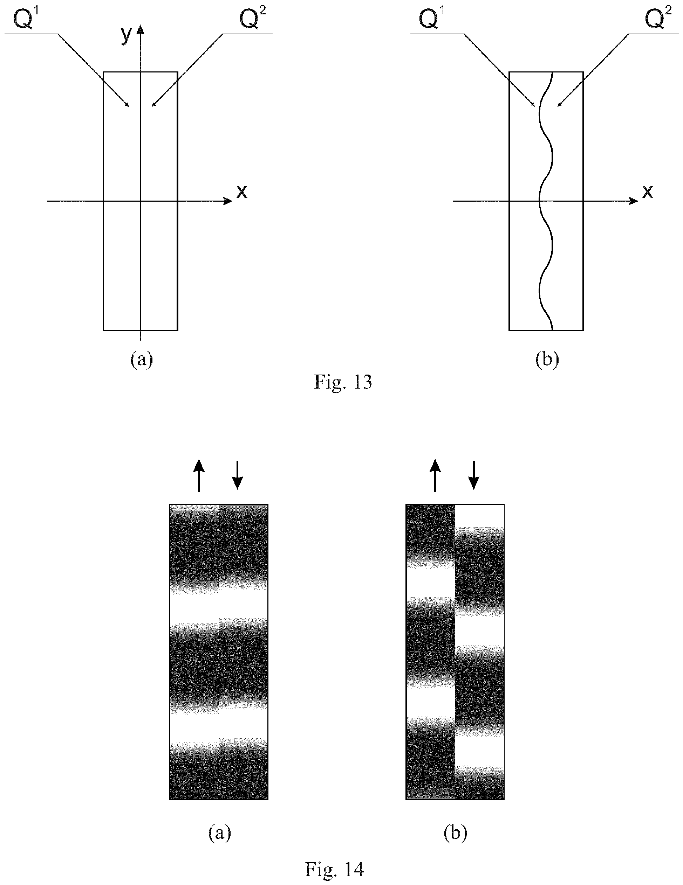

In the preferred variant of the invention as per claims 3-6 area Q is subdivided inti two areas Q¹ and Q² as shown in Fig. 13. The boundary between areas Q¹ and Q² may have the form of both a straight line as shown in Fig. 13(a) and of an undulating line as shown in Fig. 13(b).

The microoptical system as per claim 3 has optical-element area subdivided into areas Q¹ and Q². Each of the areas Q¹ and Q² is subdivided into elementary areas Q¹ᵢⱼ and Q²ᵢⱼ with the sizes no greater than 250 microns and centered on points (xᵢ,yⱼ), i = 1 ... N/2, j = 1 ... M.

For each area Q¹ᵢⱼ a flat optical element is calculated and manufactured with phase function Φ(x,y), which at each point (x,y) of elementary area Q¹ᵢⱼ is computed by formula Φ(x,y) = ϕ⁺ᵢⱼ(x,y) · ψ(y), i = 1 ... N/2, j = 1 ... M, where ϕ⁺ᵢⱼ(x,y) is the phase function of a concave axial Fresnel lens centered at point (xᵢ,yⱼ) and computed by formula ϕ⁺ᵢⱼ(x,y) = C[(x-xᵢ)²+(y-yⱼ)²], where C is a given positive parameter. For each area Q²ᵢⱼ a flat optical element is calculated and manufactured with phase function Φ(x,y), which at point (x,y) of elementary area Q²ᵢⱼ is computed by formula Φ(x,y) = ϕ⁻ᵢⱼ(x,y) · ψ(y), i = 1 ... N/2, j = 1 ... M, where ϕ⁻ᵢⱼ(x,y) is the phase function of a convex axial Fresnel lens centered at point (xᵢ,yⱼ) computed by formula ϕ⁻ᵢⱼ(x,y) = C[(x-xᵢ)²+(y-yⱼ)²], where C is a given negative parameter. Thus, the phase functions ϕ⁺ᵢⱼ(x,y) in area Q¹ and ϕ⁻ᵢⱼ(x,y) in area Q² differ only in sign. Functions ψ(y) coincide in areas Q¹ and Q². Function ψ(y), which is defined over the entire area Q, is the periodic extension of function ψ̅ (y) defined on the interval |y| ≤ T_{ψ}/2. Function ψ̅ (y) equals 1 if |y| ≤ Δ/2 and equals 0 if |y| > Δ/2. The quantity T_{ψ} and Δ are given parameters such that Δ/T_{ψ} ≤ ½ and the period T_{ϕ} of Fresnel lenses along the Oy axis, which is equal to T_{ϕ} = L_{y}/M, differs from the period T_{ψ} by no more than 5%.

When the microoptical system is illuminated by a point light source at diffraction angles smaller than 60° the observer sees in areas Q¹ and Q² images consisting of black and white stripes, which do not change when the optical element is turned right/left in the range -15°< β < 15° of turn angles. The kinematic effect consists in the motion of black and white stripes when the optical element is tilted up/down in the -30°< α < 30° range of tilt angles, and the stripes in areas Q¹ and Q² move in opposite directions. Fig. 14 shows the variants of the images of the microoptical system as per claims 3 - 6 at various diffraction angles smaller than 60°.

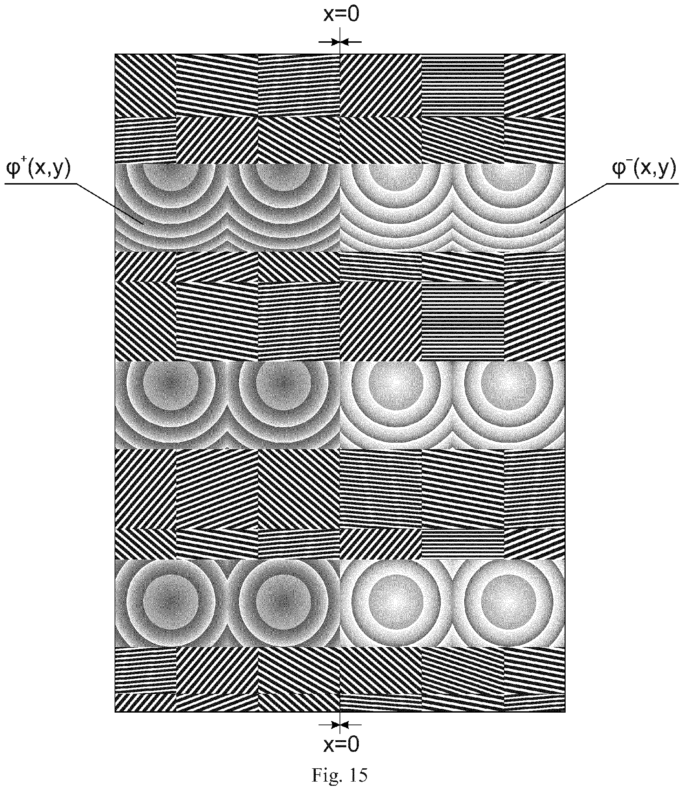

The microoptical system as per claim 4 differs in that area Q of the optical element where phase function Φ(x,y) equals zero is filled with diffraction gratings of various orientations and various periods, which do not exceed 0.6 microns. Fig. 15 shows a fragment of the microstructure of the microoptical system as per claim 4. The presented fragment consists of fragments of areas Q¹ and Q², which are located left and right of the x = 0 axis. The presented fragment has the size of 400 microns along the Ox axis and 608.4 microns along the Oy axis. The depth of the microrelief at point (x,y) is proportional to darkening at that point. The image in Fig. 15 does not claim to be a real image of microrelief, but is only a scheme of its formation. In reality, the period of diffraction gratings is smaller than 0.6 microns. Fresnel lenses does not have few zones as shown in Fig. 15. The number of Fresnel zones in a real microoptical system is on the order of 50, and the outermost zones have the size of about 1.2 microns. Such a microrelief is formed using electron-beam technology.

When the microoptical system is illuminated by a point light source at diffraction angles smaller than 60° the observer sees in areas Q¹ and Q² images shown in Fig. 14, which consist of black and white stripes, which do not change when the optical element is turned right/left in the 15°< β < 15° range of turn angles. The kinematic effect consists in the motion of black and white stripes when the optical element is tilted up/down in the -30°< α < 30° range of tilt angles, and the stripes in areas Q¹ and Q² move in opposite directions. At diffraction angles greater than 60° the observer sees another color image (Fig. 12).

The microoptical system as per claim 5 has area Q of the optical element subdivided into areas Q¹ and Q². Each of the areas Q¹ and Q² is subdivided into elementary areas Q¹ᵢⱼ and Q²ᵢⱼ. For each area Q¹ᵢⱼ a flat optical element is calculated and manufactured with phase function Φ(x,y), which at point (x,y) of elementary area Q¹ᵢⱼ is computed by formula Φ(x,y) = ϕᵢⱼ(x,y) · ψ₁(y), i = 1 ... N/2, j = 1 ... M. For each area Q²ᵢⱼ a flat optical element is calculated and manufactured with phase function Φ(x,y), which at point (x,y) of elementary area Q²ᵢⱼ is computed by formula Φ(x,y) = ϕᵢⱼ(x,y) · ψ₂(y), i = 1 ... N/2, j = 1 ... M.

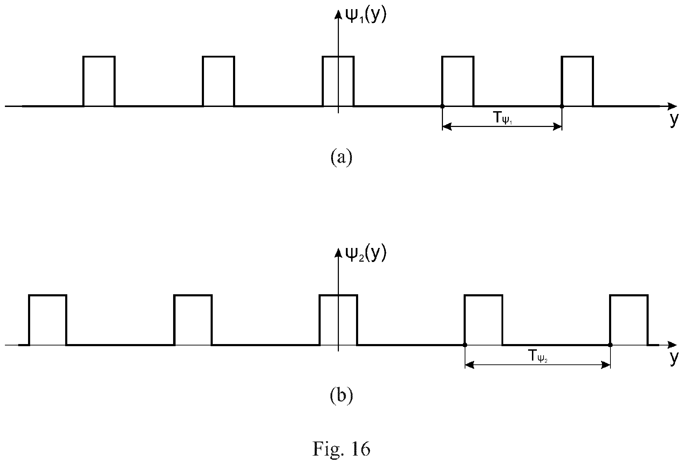

The phase functions ϕᵢⱼ(x,y) in areas Q¹ and Q² coincide. We further assume for definitiveness that the phase functions ϕᵢⱼ(x,y) are equal to ϕ⁺ᵢⱼ(x,y) = C[(x-xᵢ)²+(y-yⱼ)²] over the entire area of the optical element, where C is the given positive parameter. Functions ψ₁(y) and ψ₂(y) in areas Q¹ and Q² are different. Functions ψ₁(y) and ψ₂(y) are chosen as follows. Function ψ₁(y) defined in area Q¹ is the periodic extension of function ψ̅₁(y) defined on the |y| ≤ T_{y1}/2 interval so that ψ̅₁(y) equals 1 if |y| ≤ Δ₁/2 and equals 0 if |y| > Δ₁/2. Function ψ₂(y) defined in area Q² is the periodic extension of function ψ̅₂(y) defined on the |y| ≤ T_{ψ2}/2 interval so that ψ̅₂(y) equals 1 if |y| ≤ Δ₂/2 and equals 0 if |y| > Δ₂/2. The parameters T_{ψ1}, T_{ψ2}, Δ_{1'} and Δ₂ are given parameters such that Δ₁/T_{ψ1} ≤ ½, Δ₂/T_{ψ2} ≤ ½. The period T_{ϕ} of the Fresnel lenses along the Oy axis, which is equal to T_{ϕ} = L_{y}/M, differs from the periods T_{ψ1} and T_{ψ2} by no more than 5%, and (T_{ϕ} - T_{ψ1}) and (T_{ϕ} - T_{ψ2}) have opposite signs. Thus, one of the two relations - T_{ψ1} < T_{ϕ} < T_{ψ2} or T_{ψ2} < T_{ϕ} < T_{ψ1} - is satisfied. Fig. 16 shows plots of functions ψ₁(y) and ψ₂(y).

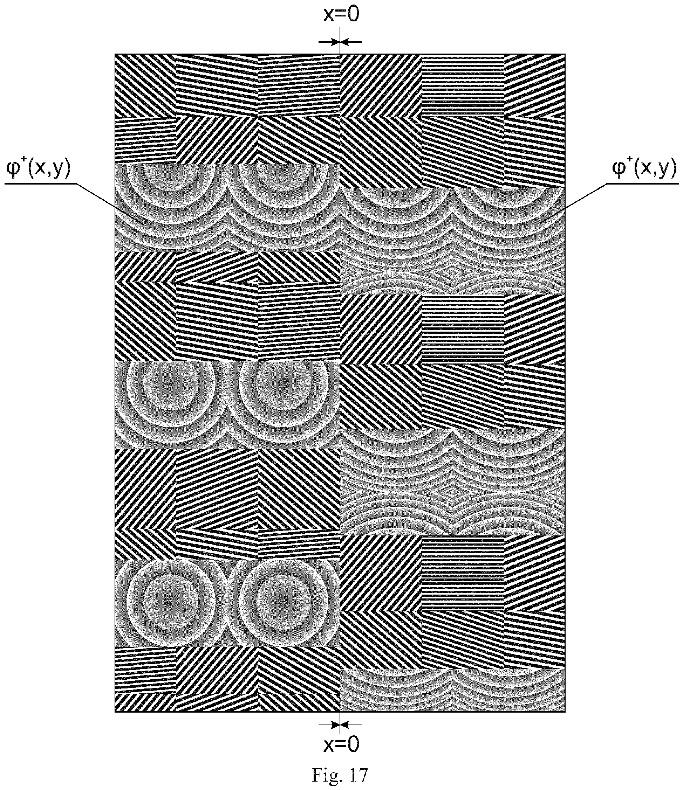

Fig. 17 shows a fragment of the microstructure of the microoptical system as per claim 6. The presented fragment consists of fragments of areas Q¹ and Q², which are located left and right of the x = 0 axis. The phase functions ϕᵢⱼ(x,y) in areas Q¹ and Q² coincide, but functions ψ₁(y) and ψ₂(y) are different. The depth of the microrelief at point (x,y) is proportional to darkening at that point.

When the microoptical system is illuminated by a point light source at diffraction angles smaller than 60° the observer sees in areas Q¹ and Q² images shown in Fig. 14 and consisting of black and white stripes, which do not change when the optical element is turned right/left in the range -15°< β < 15° of turn angles. The kinematic effect consists in the motion of black and white stripes when the optical element is tilted up/down in the -30°< α < 30° range of tilt angles, and the stripes in areas Q¹ and Q² move in opposite directions. At diffraction angles greater than 60° the observer sees another color image (Fig. 12).

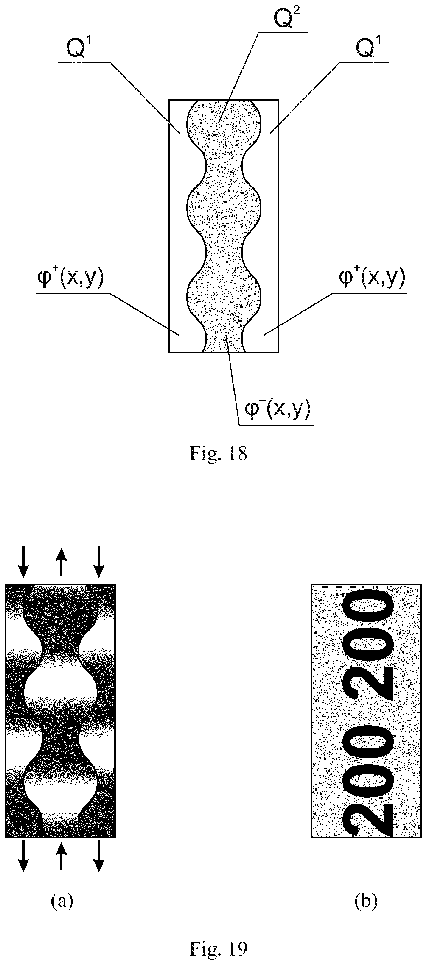

Fig. 18 shows another variant of the partition of the security thread into areas Q¹ and Q². Such a variant can be efficiently used if the width of the thread is greater than 4 mm. Fig. 19 shows the images seen by the observer at diffraction angles smaller than 60° (a) and greater than 60° (b) for a 4.5 mm wide security thread. The effect of the motion of black and white stripes at diffraction angles smaller than 60° is easy to control visually. At diffraction angles greater than 60° the observer sees another color image over the entire area of the optical element.

In the preferred variant of the realization of microoptical systems of the formation of visual images with kinematic effects of motion a variant as per claims 3, 4 or a variant as per claims 5, 6 can be used.

The central issue of the technology is how the original of the microoptical system is recorded. Microoptical systems proposed in the claimed invention are made using electron-beam technology. Electron-beam lithography provides very high resolution (0.1 microns or better) and ensures the required accuracy of the production of the microrelief - about 20 nanometers. Currently, several hundred companies produce security holograms. Practically all these companies use optical technologies to record the originals of security features. Optical methods of the synthesis of originals include the technologies KineMax, Kinegram, etc. (van Renesse, Rudolf L, Optical Document Security, 3rd ed. British Library Cataloguing in Publication Data, 2005, ISBN 1-58053-258-6, van Renesse, Rudolf L, Optical Document Security, 2nd ed. British Library Cataloguing in Publication Data, 1998, ISBN 0-89006-982-4). It is impossible to produce the original of the clamed microoptical system using the technologies described above. Electron-beam technology is not widely used and is very knowledge intensive, thereby securely protecting the microoptical systems claimed in the useful model against counterfeit.

The main differences of the claimed microoptical system from the prototype consist in the following:
1. The claimed microoptical system consists of multilevel diffractive optical elements - flat Fresnel lenses with parabolic phase function and fragments of diffraction gratings. An essential difference from the prototype, where fragments of circular off-axis Fresnel lenses are used, the claimed invention uses fragments of axial rectangular Fresnel lenses. In the prototype the characteristic size of circular off-axis Fresnel lenses employed is in range 0.5-1.5 mm. In the clamed invention the size of axial Fresnel lenses does not exceed 250 microns. The preferred variant in the prototype is based on the use of overlapping Fresnel lenses with rather large overlap area (about 40% and more). In the claimed invention lenses do not overlap.
2. The technology proposed in the claim for the invention allows making optical security threads with a minimal width of 1 mm. The kinematic effect of the motion of image fragments when the optical element is tilted is, like in the prototype, easy to control visually. However, in the prototype the optical security element forms an image consisting of bright dots. Given the minimal, diameter of circular Fresnel lenses of about 0.5 mm, to form digit or letter symbols the width of the security thread should be on the order of 5 mm. Thus, the claimed invention makes it possible to extend the capabilities of the use of optical security elements with kinematic effects of motion to protect bank notes or securities.
3. Unlike the prototype, the image formed consists of black and white stripes. White image fragments are formed by axial multilevel diffraction Fresnel lenses, whereas the black stripes are formed by optical-element areas where function ψ(y) equals zero. In the prototype the visual image consists of a small set of bright dots.
4. A distinguishing feature of the claimed microoptical system is that images formed by the microoptical system can be observed over a wide range of angles. In the preferred variant of the invention when the microoptical system is illuminated by a point light source the observer sees at diffraction angles smaller than 60° images consisting of black and white stripes, which do not change when the optical element is turned right/left in the -15°< β < 15° interval of turn angles. The kinematic effect consists in the motion of horizontal black and white stripes when the optical element is tilted up/down in the -30°< α < 30°interval of angles, and the stripes in areas Q¹ and Q² move in opposite directions. At diffraction angles greater than 60° the observer sees another color image.
5. In the θ < 60° interval of observing angles the claimed range of the parameters of the microoptical system provides identical directional diagram for left and right eyes, thereby ensuring a sharper image compared to the prototype. In the prototype the image is formed as a bright dot inside a circular Fresnel lens, and the images for the left and right eye differ from each other.
6. The claimed microoptical system is better protected because it uses multilevel axial Fresnel lenses exclusively. The accuracy of the microrelief formation must be 20 nanometers of better in terms of height. The formation of the microrelief of such optical elements is a challenging scientific and technological task, which can be addressed only using electron-beam lithography. (A.A.Goncharsky «A problem of the synthesis of nanooptical elements». «Vychislitel'nye metody i programmirovanie». 2008. V. 9. P. 405). This circumstance substantially restricts the range of technologies that allow manufacturing the original of the claimed microoptical system. With the original produced using electron-beam technology, the claimed microoptical system can be replicated using standard equipment for producing security holograms, thereby ensuring low cost of optical security features.

The combination of the claimed features ensures the achievement of the claimed technical result.

As an example of the realization of the invention, four microoptical systems were made in the form of a 2 mm, 3 mm and 4.5 mm wide reflecting holographic thread for protecting bank notes and securities. For the formation of the microrelief convex and concave rectangular Fresnel lenses with parabolic phase function were used. The size of Qij rectangles was about 100×200 microns. The minimal size of the outermost Fresnel zone is of about 1.2 microns. The number of Fresnel zones is on the order of 50. The size of the central zone is about 10 microns. Figs. 9 and 11 show the scheme of observation of the microoptical system at diffraction angles θ < 60° and θ > 60°, respectively. For the formation of the image at greater diffraction angles diffraction gratings with the periods of 0.45 and 0.55 micron were used. The size of the fragments pf diffraction gratings is 20 microns.

Originals of microoptical systems were made using electron-beam lithography. Electrotyping was used to make master matrices of microoptical systems. After standard holographic procedure of replication to size 152.4 mm×152.4 mm replicated master shims were made, which were then used to produce working shims for embossing. Standard embossing equipment was then used to produce 20 cm wide holographic foil. After the application of glue layers and cutting, 2 mm, 3 mm and 4.5 mm wide sample holographic threads were made.

### Example 1.

As an example of the realization of the claimed invention as per claims 1, 2 a microoptical system was made in the form of a 2 mm wide holographic security thread. In Fig. 1 parameter Lₓ = 2 mm and parameter L_{y} = 30.42 mm. Fig. 2 shows the scheme of the partitioning of the optical element into elementary areas Qij. For the formation of Fresnel lenses the phase function ϕ⁺ᵢⱼ(x,y) was used. The difference between the periods T_{ϕ} = 202.8 µm and T_{ψ} = 195 µm was 3.85%. Fig. 12 shows the color image seen at large diffraction angles (greater than 60°). Fig. 10 shows the monochrome image seen at diffraction angles smaller than 60°. The monochrome image consists of black and white stripes, which move when the holographic thread is tilted up/down.

### Example 2.

As an example of the realization of the claimed invention as per claims 3, 4 a microoptical system was made in the form of a 3 mm wide holographic security thread. In Fig. 1 parameter Lₓ = 3 mm and parameter L_{y} = 30.42 mm. Fig. 2 shows the scheme of the partitioning of the optical element into areas Q¹ and Q². For the formation of Fresnel lenses the phase functions ϕ⁺ᵢⱼ(x,y) and ϕ⁻ᵢⱼ(x,y) were used for areas Q¹ and Q², respectively. The difference between the periods T_{ϕ} = 202.8 µm and T_{ψ} = 195 µm was 3.85%. Fig. 13(a) shows the color image seen at large diffraction angles (greater than 60°). Fig. 12 shows the monochrome image seen at diffraction angles smaller than 60°. The monochrome image consists of black and white stripes, which move toward each other when the holographic thread is tilted up/down.

### Example 3.

As an example of the realization of the claimed invention as per claims 5, 6 a microoptical system was made in the form of a 3 mm wide holographic security thread. In Fig. 1 parameter Lₓ = 3 mm and parameter L_{y} = 30.42 mm. Fig. 13(b) shows the scheme of the partitioning of the optical element into areas Q¹ and Q². For the formation of Fresnel lenses the phase functions ϕ⁺ᵢⱼ(x,y) was used for areas Q¹ and Q², respectively. The difference between the periods T_{ϕ} = 202.8 µm and T_{ψ1} = 195.2 µm and T_{ψ1} = 208.8 µm was 6.51%. The periods T_{ϕ} (= 202.8 µm), T_{ψ1} and T_{ψ2} were chosen so that the quantities (T_{ϕ} - T_{ψ1}) and (T_{ϕ} - T_{ψ2}) would have opposite signs. Fig. 12 shows the color image seen at large diffraction angles (greater than 60°). Fig. 14 shows the monochrome image seen at diffraction angles smaller than 60°. The monochrome image consists of black and white stripes, which move toward each other when the holographic thread is tilted up/down.

### Example 4.

As an example of the realization of the claimed invention as per claims 3, 4 a microoptical system was made in the form of a 4.5 mm wide holographic security thread. In Fig. 1 parameter Lₓ = 4.5 mm and parameter L_{y} = 30.42 mm. Fig. 18 shows the scheme of the partitioning of the optical element Q into areas Q¹ and Q². For the formation of Fresnel lenses the phase functions ϕ⁺ᵢⱼ(x,y) and ϕ⁻ᵢⱼ(x,y) were used for areas Q¹ and Q², respectively. The difference between the periods T_{ϕ} = 202.8 µm and T_{ψ} = 195 µm was 3.85%. Fig. 19(b) shows the color image seen at large diffraction angles greater than 60°. Fig. 19(a) shows the monochrome image seen at diffraction angles smaller than 60°.

The sample threads made demonstrated high efficiency of the technology proposed in the claim for the production of holographic security threads. Visual images are easy to control. Microoptical systems are securely protected against counterfeit. Microoptical systems claimed in the invention can be used to protect bank notes, securities, documents, excise stamps, and plastic cards.

## Claims

1. The microoptical system for the formation of visual images with kinematic effects of motion in the form of a flat reflecting phase diffractive optical element **characterized in that** area Q of the optical element, which has the shape of a rectangle, |x| ≤ Lₓ/2, |y| ≤ L_{y}/2, is subdivided into elementary areas Qij with the sizes no greater than 250 microns centered on points (xᵢ,yⱼ), i = 1 ... N, j = 1 ... M, where for each area Qij a flat optical element is calculated and manufactured with phase function Φ(x,y), which at point (x,y) of each elementary area Qij is computed by formula Φ(x,y) = ϕᵢⱼ(x,y) · ψ(y), i = 1 ... N, j = 1 ... M, where ϕᵢⱼ(x,y) is the phase function of the axial Freesnel lens centered on point (xᵢ,yⱼ) and computed by formula ϕᵢⱼ(x,y) = C[(x-xᵢ)²+(y-yⱼ)²], where C is a given parameter and function ψ(y) is the periodic extension of function ψ(y) defined on the |y| ≤ T_{ψ}/2 interval so that ψ(y) equals 1 if |y| ≤ Δ/2 and equals 0 if |y| > Δ/2, where T_{ψ} and Δ are given parameters such that Δ/T_{ψ} ≤ ½, and the period T_{ϕ} of Fresnel lenses along the Oy axis, which is equal to T_{ϕ} = L_{y}/M, differs from the period T_{ψ}, yet by no more than 5%, wherein, when the microoptical system is illuminated by a point light source at diffraction angles smaller than 60° the observer sees over the entire area Q of the optical element an image consisting of black and white stripes, which does not change when the optical element is turned right/left in the -15°< β < 15° range of turn angles, the kinematic effect consists in the motion of black and white stripes when the optical element is tilted up/down in the -30°< α < 30° range of tilt angles.

2. The microoptical system as per claim 1 that differs in that area Q of the optical element where phase function Φ(x,y) equals zero is filled with diffraction gratings of various orientations and various periods, which do not exceed 0.6 microns, when the microoptical system is illuminated by a point light source, at diffraction angles greater than 60° the observer sees another color image.

3. The microoptical system for the formation of visual images with kinematic effects of motion in the form of a flat reflecting phase diffractive optical element **characterized in that** area Q of the optical element, which has the shape of a rectangle, |x| ≤ Lₓ/2, |y| ≤ L_{y}/2, contains two non-overlapping areas: area Q¹ consisting of points (x,y) of area Q with positive x coordinates, and area Q² consisting of points (x,y) of area Q with negative x coordinates, and each of the areas Q¹ and Q² is subdivided into elementary areas Q¹ᵢⱼ and Q²ᵢⱼ with the sizes no greater than 250 microns and centered on points (xᵢ,yⱼ), i = 1 ... N/2, j = 1 ... M, where for each area Q¹ᵢⱼ a flat optical element is calculated and manufactured with phase function Φ(x,y), which at point (x,y) of elementary area Q¹ᵢⱼ is computed by formula Φ(x,y) = ϕ⁺ᵢⱼ(x,y) · ψ(y), i = 1 ... N/2, j = 1 ... M, where ϕ⁺ᵢⱼ(x,y) is the phase function of a concave axial Fresnel lens centered at point (xᵢ,yⱼ) and computed by formula ϕ⁺ᵢⱼ(x,y) = C [(x-xᵢ)²+(y-yⱼ)²], where C is a given positive parameter, and in each area Q²ᵢⱼ a flat optical element is calculated and manufactured with phase function Φ(x,y), which at point (x,y) of elementary area Q²ᵢⱼ is computed by formula Φ(x,y) = ϕ⁻ᵢⱼ(x,y) · ψ(y), i = 1 ... N/2, j = 1 ... M, where ϕᵢⱼ(x,y) is the phase function of a convex axial Fresnel lens centered at point (xᵢ,yⱼ) and computed by formula ϕ⁻ᵢⱼ(x,y) = C [(x-xᵢ)²+(y-yⱼ)²], where C is a given negative parameter, and function ψ (y) defined over the entire area Q is the periodic extension of function ψ̅(y) defined over the |y| ≤ T_{ψ}/2 interval so that ψ̅(y)equals 1 if |y| ≤ Δ/2 and equals 0 if |y| > Δ/2, where T_{ψ} and Δ - are given parameters such that Δ/T_{ψ} ≤ ½, and the period T_{ϕ} of Fresnel lenses along the Oy axis, which is equal to T_{ϕ} = L_{y}/M, differs from the period T_{ψ}, yet by no more than 5%, and if the microoptical system is illuminated by a point light source then at diffraction angles smaller than 60° the observer sees in areas Q¹ and Q² images consisting of black and white stripes, which do not change when the optical element is turned right/left in the -15°< β < 15° range of turn angles, and the kinematic effect consists in the motion of black and white stripes when the optical element is tilted up/down in the -30°< α < 30° range of tilt angles so that the stripes in areas Q¹ and Q² move in opposite directions.

4. The microoptical system as per claim 3 that differs in that area Q of the optical element where phase function Φ(x,y) equals zero is filled with diffraction gratings of various orientations and various periods, which do not exceed 0.6 microns, such that when the microoptical system is illuminated by a point light source, at diffraction angles greater than 60° the observer sees another color image.

5. The microoptical system for the formation of visual images with kinematic effects of motion in the form of a flat reflecting phase diffractive optical element **characterized in that** area Q of the optical element, which has the shape of a rectangle, |x| ≤ Lₓ/2, |y| ≤ L_{y}/2, contains two non-overlapping areas: area Q¹ consisting of points (x,y) of area Q with positive x coordinates and area Q² consisting of points (x,y) of area Q with negative x coordinates, and each of the areas Q¹ and Q² is subdivided into elementary areas Q¹ᵢⱼ and Q²ᵢⱼ with the sizes no greater than 250 microns centered on points (xᵢ,yⱼ), i = 1 ... N/2, j = 1 ... M, where for each area Q¹ᵢⱼ a flat optical element is calculated and manufactured with phase function Φ(x,y), which at point (x,y) of elementary area Q¹ᵢⱼ is computed by formula Φ(x,y) = ϕᵢⱼ(x,y) · ψ₁(y), i = 1 ... N/2, j = 1 ... M, and for each area Q²ᵢⱼ a flat optical element is calculated and manufactured with phase function Φ(x,y), which at point (x,y) of elementary area Q²ᵢⱼ is computed by formula Φ(x,y) = ϕᵢⱼ(x,y) · ψ₂(y), i = 1 ... N/2, j = 1 ... M, where ϕᵢⱼ(x,y) is the phase function of the axial Fresnel lens centered on point (xᵢ,yⱼ) and computed by formula ϕᵢⱼ(x,y) = C[(x-xᵢ)²+(y-yⱼ)²], where C is a given parameter and function ψ₁(y) defined in area Q¹ is the periodic extension of function ψ̅₁(y) defined on the |y| ≤ T_{ψ1}/2 interval so that ψ̅₁(y) equals 1 if |y| ≤ Δ₁/2 and equals 0 if |y| > Δ₁/2, and function ψ₂(y) defined in area Q² is the periodic extension of function ψ̅₂(y) defined on the |y| ≤ T_{ψ2}/2 interval so that ψ̅₂(y) equals 1 if |y| ≤ Δ₂/2 and equals 0 if |y| > Δ₂/2, where T_{ψ1}, T_{ψ2}, Δ_{1'} and Δ₂ are given parameters such that Δ₁/T_{ψ1} ≤ ½, Δ₂/T_{ψ2} ≤ ½, and the period T_{ϕ} of Fresnel lenses along the Oy axis, which is equal to T_{ϕ} = L_{y}/M, differs from the periods T_{ψ1} and T_{ψ2}, yet by no more than 5%, and the quantities (T_{ϕ} - T_{ψ1}) and (T_{ϕ} - T_{ψ2}) have opposite signs, wherein, when the microoptical system is illuminated by a point light source then at diffraction angles smaller than 60° the observer sees in areas Q¹ and Q² images consisting of black and white stripes, which do not change when the optical element is turned right/left in the -15°< β < 15° range of turn angles, the kinematic effect consists in the motion of black and white stripes when the optical element is tilted up/down in the -30°< α < 30° range of tilt angles with the stripes in areas Q¹ and Q² moving in opposite directions.

6. The microoptical system as per claim 5 that differs in that area Q of the optical element where phase function Φ(x,y) equals zero is filled with diffraction gratings of various orientations and various periods, which do not exceed 0.6 microns, and when the microoptical system is illuminated by a point light source then at diffraction angles greater than 60° the observer sees another color image.

## Patentansprüche

1. Mikrooptisches System zur Erzeugung visueller Bilder mit kinematischen Bewegungseffekten in Form eines flachen reflektierenden phasenbeugenden optischen Elements **dadurch gekennzeichnet, dass** die Fläche Q des optischen Elements, die die Form eines Rechtecks hat, |x| ≤ Lₓ/2, |y| ≤ L_{y}/2, in Elementarflächen Qᵢⱼ mit den Größen nicht größer als 250 Mikrometer, die auf Punkte (xᵢ,yⱼ), i = 1 ... N, j = 1 ... M, zentriert sind, unterteilt ist, wobei für jede Fläche Qᵢⱼ ein flaches optisches Element mit Phasenfunktion Φ(x,y) berechnet und hergestellt wird, die am Punkt (x,y) jeder Elementarfläche Qᵢⱼ nach der Formel Φ(x,y) = ϕᵢⱼ(x,y) · ψ(y), i = 1 ... N, j = 1 ... M berechnet wird, wobei ϕᵢⱼ(x,y) die Phasenfunktion der axialen Fresnel-Linse ist, die auf Punkt (xᵢ,yⱼ) zentriert ist und nach der Formel ϕᵢⱼ(x,y) = C [(x-xᵢ)²+(y-yⱼ)²] berechnet wird, wobei C ein gegebener Parameter ist und Funktion ψ(y) die periodische Erweiterung der Funktion *ψ*(y) ist, die auf Intervall |y| ≤ T_{ψ}/2 so definiert ist, dass *ψ*(y) gleich 1 ist, wenn |y| ≤ Δ/2 ist, und *ψ*(y) gleich 0 ist, wenn |y| > Δ/2 ist, wobei T_{ψ} und Δ gegebene Parameter sind, so dass Δ/T_{ψ} ≤ ½ ist und die Periode T_{ϕ} der Fresnel-Linsen entlang der Oy-Achse, die gleich T_{ϕ} = L_{y}/M ist, sich von der Periode T_{ψ} unterscheidet, jedoch um nicht mehr als 5%, wobei, wenn das mikrooptische System von einer Punktlichtquelle mit Beugungswinkeln kleiner als 60° beleuchtet wird, sieht der Betrachter über die gesamte Fläche Q des optischen Elements ein aus schwarzen und weißen Streifen bestehendes Bild, das sich nicht ändert, wenn das optische Element im Drehwinkelbereich von -15° < β < 15° nach rechts/links gedreht wird, und der kinematische Effekt in der Bewegung aus schwarzen und weißen Streifen besteht, wenn das optische Element im Neigungswinkelbereich -30°< α < 30° nach oben/unten gekippt wird.

2. Mikrooptisches System nach Anspruch 1, das sich dadurch unterscheidet, dass die Fläche Q des optischen Elements, bei der die Phasenfunktion Φ(x,y) gleich Null ist, mit Beugungsgittern verschiedener Orientierungen und verschiedener Perioden, die 0,6 Mikrometer nicht überschreiten, gefüllt ist, wobei, wenn das mikrooptische System von einer Punktlichtquelle beleuchtet wird, sieht der Betrachter bei Beugungswinkeln größer als 60° ein anderes Farbbild.

3. Mikrooptisches System zur Erzeugung visueller Bilder mit kinematischen Bewegungseffekten in Form eines flachen reflektierenden phasenbeugenden optischen Elements **dadurch gekennzeichnet, dass** die Fläche Q des optischen Elements, die die Form eines Rechtecks hat, |x| ≤ Lₓ/2, |y| ≤ L_{y}/2, zwei nicht überlappende Flächen enthält: Fläche Q¹, die aus Punkten (x,y) der Fläche Q mit positiven x-Koordinaten besteht und Fläche Q², der aus Punkten (x,y) der Fläche Q mit negativen x-Koordinaten besteht, und jede der Flächen Q¹ und Q² in Elementarflächen Q¹ᵢⱼ und Q²ᵢⱼ mit den Größen nicht größer als 250 Mikrometer unterteilt und auf Punkte (xᵢ,yᵢ), i = 1 ... N/2, j = 1 ... M, zentriert sind, wobei für jede Fläche Q¹ᵢⱼ ein flaches optisches Element mit Phasenfunktion Φ(x,y) berechnet und hergestellt wird, die am Punkt (x,y) der Elementarfläche Q¹ᵢⱼ nach der Formel Φ(x,y) = ϕ⁺ᵢⱼ(x,y) · ψ(y), i = 1 ... N/2, j = 1 ... M berechnet wird, wobei ϕ⁺ᵢⱼ(x,y) die Phasenfunktion der konkaven axialen Fresnel-Linse ist, die auf Punkt (xᵢ,yᵢ) zentriert ist und nach der Formel ϕ⁺ᵢⱼ(x,y) = C [(x-xᵢ)²+(y-yⱼ)²] berechnet wird, wobei C ein gegebener positiver Parameter ist, und für jede Fläche Q²ᵢⱼ ein flaches optisches Element mit Phasenfunktion Φ(x,y) berechnet und hergestellt wird, die am Punkt (x,y) der Elementarfläche Q²ᵢⱼ nach der Formel Φ(x,y) = ϕ⁻ᵢⱼ(x,y) · ψ(y), i = 1 ... N/2, j = 1 ... M berechnet wird, wobei ϕ⁻ⱼⱼ(x,y) die Phasenfunktion der konvexen axialen Fresnel-Linse ist, die auf Punkt (xᵢ,yⱼ) zentriert ist und nach der Formel ϕ⁻ᵢⱼ(x,y) = C [(x-xᵢ)²+(y-yⱼ)²] berechnet wird, wobei C ein gegebener negativer Parameter ist, und die über die gesamte Fläche Q definierte Funktion ψ(y) die periodische Erweiterung der Funktion *ψ*(y) ist, die über Intervall |y| ≤ T_{ψ}/2 so definiert ist, dass *ψ*(y) gleich 1 ist, wenn |y| ≤ Δ/2 ist, und *ψ*(y) gleich 0 ist, wenn |y| > Δ/2 ist, wobei T_{ψ} und Δ gegebene Parameter sind, so dass Δ/T_{ψ} ≤ ½ ist und die Periode T_{ϕ} der Fresnel-Linsen entlang der Oy-Achse, die gleich T_{ϕ} = L_{y}/M ist, sich von der Periode T_{ψ} unterscheidet, jedoch um nicht mehr als 5%, und, wenn das mikrooptische System von einer Punktlichtquelle mit Beugungswinkeln kleiner als 60° beleuchtet wird, sieht der Betrachter in den Flächen Q¹ und Q² Bilder, die aus schwarzen und weißen Streifen bestehen, die sich nicht ändern, wenn das optische Element im Drehwinkelbereich von -15° < β < 15° nach rechts/links gedreht wird, und der kinematische Effekt in der Bewegung aus schwarzen und weißen Streifen besteht, wenn das optische Element im Neigungswinkelbereich -30°< α < 30° nach oben/unten gekippt wird, so dass sich die Streifen in den Flächen Q¹ und Q² in die entgegengesetzten Richtungen bewegen.

4. Mikrooptisches System nach Anspruch 3, das sich dadurch unterscheidet, dass die Fläche Q des optischen Elements, bei der die Phasenfunktion Φ(x,y) gleich Null ist, mit Beugungsgittern verschiedener Orientierungen und verschiedener Perioden, die 0,6 Mikrometer nicht überschreiten, gefüllt ist, so dass, wenn das mikrooptische System von einer Punktlichtquelle beleuchtet wird, sieht der Betrachter bei Beugungswinkeln größer als 60° ein anderes Farbbild.

5. Mikrooptisches System zur Erzeugung visueller Bilder mit kinematischen Bewegungseffekten in Form eines flachen reflektierenden phasenbeugenden optischen Elements **dadurch gekennzeichnet, dass** die Fläche Q des optischen Elements, die die Form eines Rechtecks hat, |x| ≤ Lₓ/2, lyl ≤ L_{y}/2, zwei nicht überlappende Flächen enthält: Fläche Q¹, die aus Punkten (x,y) der Fläche Q mit positiven x-Koordinaten besteht und Fläche Q², die aus Punkten (x,y) der Fläche Q mit negativen x-Koordinaten besteht, und jede der Flächen Q¹ und Q² in Elementarflächen Q¹ᵢⱼ und Q²ᵢⱼ mit den Größen nicht größer als 250 Mikrometer unterteilt und auf Punkte (xᵢ,yⱼ), i = 1 ... N/2, j = 1 ... M, zentriert sind, wobei für jede Fläche Q¹ᵢⱼ ein flaches optisches Element mit Phasenfunktion Φ(x,y) berechnet und hergestellt wird, die am Punkt (x,y) der Elementarfläche Q¹ᵢᵢ nach der Formel Φ(x,y) = φᵢⱼ(x,y) · ψ₁(y), i = 1 ... N/2, j = 1 ... M berechnet wird, und für jede Fläche Q²ᵢⱼ ein flaches optisches Element mit Phasenfunktion Φ(x,y) berechnet und hergestellt wird, die am Punkt (x,y) der Elementarfläche Q²ᵢⱼ nach der Formel Φ(x,y) = ϕ(x,y) · ψ₂(y), i = 1 ... N/2, j = 1 ... M berechnet wird, wobei ϕᵢⱼ(x,y) die Phasenfunktion der axialen Fresnel-Linse ist, die auf Punkt (xᵢ,yⱼ) zentriert ist und nach der Formel ϕᵢⱼ(x,y) = C [(x-xᵢ)2+(y-yⱼ)²] berechnet wird, wobei C ein gegebener Parameter ist, und die in der Fläche Q¹ definierte Funktion ψ₁(y) die periodische Erweiterung der Funktion *ψ*₁(y) ist, die über Intervall |y| ≤ T_{ψ1}/2 so definiert ist, dass *ψ*₁(y) gleich 1 ist, wenn |y| ≤ Δ₁/2 ist, und *ψ*₁(y) gleich 0 ist, wenn |y| > Δ₁/2 ist, und die in der Fläche Q² definierte Funktion ψ₂(y) die periodische Erweiterung der Funktion *ψ*₂(y) ist, die über Intervall |y| ≤ T_{ψ2}/2 so definiert ist, dass *ψ*₂(y) gleich 1 ist, wenn |y| ≤ Δ₂/2 ist, und *ψ*₂(y) gleich 0 ist, wenn |y| > Δ₂/2 ist, wobei T_{ψ1}, T_{ψ2}, Δ₁ und Δ₂ gegebene Parameter sind, so dass Δ₁/Γ_{ψ1} ≤ ½ ist und Δ₂/T_{ψ2} ≤ ½ ist, und die Periode T_{ϕ} der Fresnel-Linsen entlang der Oy-Achse, die gleich T_{ϕ} = L_{y}/M ist, sich von den Perioden T_{ψ1} und T_{ψ2} unterscheidet, jedoch um nicht mehr als 5%, und die Größen (T_{ϕ} - T_{ψ1}) und (T_{ϕ} -T_{ψ2}) entgegengesetzte Vorzeichen haben, wobei, wenn das mikrooptische System von einer Punktlichtquelle mit Beugungswinkeln kleiner als 60° beleuchtet wird, sieht der Betrachter in den Flächen Q¹ und Q² Bilder, die aus schwarzen und weißen Streifen bestehen, die sich nicht ändern, wenn das optische Element im Drehwinkelbereich von -15° < β < 15° nach rechts/links gedreht wird, und der kinematische Effekt in der Bewegung aus schwarzen und weißen Streifen besteht, wenn das optische Element im Neigungswinkelbereich -30°< α < 30° nach oben/unten gekippt wird, so dass sich die Streifen in den Flächen Q¹ und Q² in die entgegengesetzten Richtungen bewegen.

6. Mikrooptisches System nach Anspruch 5, das sich dadurch unterscheidet, dass die Fläche Q des optischen Elements, bei der die Phasenfunktion Φ(x,y) gleich Null ist, mit Beugungsgittern verschiedener Orientierungen und verschiedener Perioden, die 0,6 Mikrometer nicht überschreiten, gefüllt ist, und, wenn das mikrooptische System von einer Punktlichtquelle beleuchtet wird, sieht der Betrachter bei Beugungswinkeln größer als 60° ein anderes Farbbild.

## Revendications

1. Le système micro-optique pour la formation d'images visuelles avec des effets cinématiques de mouvement sous la forme d'un élément optique à diffraction de phase réfléchissant plat **caractérisé en ce que** la zone Q de l'élément optique, qui a la forme d'un rectangle, |x| ≤ Lₓ/2, |y| ≤ L_{y}/2, est subdivisé en zones élémentaires Qⱼₑ avec des tailles ne dépassant pas 250 microns centrés sur des points (xᵢ,yⱼ), i = 1 ... N, j = 1 .. .M, où pour chaque zone Qᵢⱼ un élément optique plat est calculé et fabriqué avec une fonction de phase Φ(x,y), qui au point (x,y) de chaque aire élémentaire Qⱼₑ est calculé par la formule Φ (x,y) = (x,y) · ψ(y), i = 1 ... N, j = 1 ... M, où ϕ(x,y) est la fonction de phase de la lentille de Fresnel axiale centrée sur le point (xᵢ,yⱼ) et calculé par la formule ϕ(x,y) =C[(x-xᵢ)²+(y-yⱼ)²], où C est un paramètre donné et une fonction ψ(y) est l'extension périodique de la fonction *ψ̅*(y) définie sur l'intervalle |y| ≤ T_{ψ}/2 de sorte que *ψ̅*(y) est égal à 1 si |y| Δ/2 et égal à 0 si |y| > Δ/2, où T_{ψ} et Δ sont des paramètres donnés tels que Δ/T_{ψ}, ≤ ½, et la période T_{ϕ} des lentilles de Fresnel le long de l'axe Oy, qui est égal à T_{ϕ} = L_{y}/M, diffère de la période T_{ψ}, cependant par pas plus de 5 %, dans lequel, lorsque le système micro-optique est éclairé par une source lumineuse ponctuelle à des angles de diffraction inférieurs à 60 °, l'observateur voit sur toute la zone Q de l'élément optique une image constituée de bandes noires et blanches, qui ne change pas lorsque l'élément optique est tourné à droite/gauche dans une plage d'angles de rotation -15° < β < 15°, l'effet cinématique consiste en un mouvement de bandes noires et blanches lorsque l'élément optique est incliné vers le haut/bas dans une plage d'angles d'inclinaison -30°< α < 30°.

2. Le système micro-optique selon la revendication 1, qui diffère dans cette zone Q de l'élément optique où la fonction de phase Φ(x,y) est égale à zéro est rempli de réseaux de diffraction de diverses orientations et de diverses périodes, qui ne dépassent pas 0,6 micron, lorsque le système micro-optique système est éclairé par une source lumineuse ponctuelle, à des angles de diffraction supérieurs à 60°, l'observateur voit une autre image couleur.

3. Le système microoptique pour la formation d'images visuelles avec effets cinématiques de mouvement sous la forme d'un élément optique diffractif de phase réfléchissant plat **caractérisé en ce que** la zone Q de l'élément optique, qui a la forme d'un rectangle, |x| ≤ Lₓ/2, |y| ≤ L_{y}/2, contient deux zones qui ne se chevauchent pas : la zone Q¹ constitué de points (x,y) de la zone Q avec des coordonnées x positives, et la zone Q² constitué des points (x,y) de l'aire Q avec des coordonnées x négatives, et chacune des zones Q¹ et Q² est subdivisé en zones élémentaires Q¹ᵢⱼ et Q²ᵢⱼ avec des tailles ne dépassant pas 250 microns et centrées sur des points (xᵢ,yᵢ), i = I ... N/2, j = 1 ... M, où pour chaque zone Q¹ᵢⱼ un élément optique plat est calculé et fabriqué avec une fonction de phase (x, y), qui au point (x, y) de La zone élémentaire Q¹ᵢⱼ est calculé par la formule Φ (x,y) = Φ⁺ᵢⱼ(x,y) · ψ (y), i = 1 ... N/2, j = 1 ... M, où Φ⁺ᵢⱼ(x,y) est la fonction de phase d'une lentille de Fresnel axiale concave centrée au point (xᵢ,yⱼ) et calculé par la formule Φ⁺ᵢⱼ (x,y) = C [(x-xᵢ)²+(y-yⱼ)²], où C est un un paramètre donné positif, et dans chaque zone Q²ᵢⱼ un élément optique plat est calculé et fabriqué avec une fonction de phase Φ(x,y), qui au point (x,y) de la zone élémentaire Q²ᵢⱼ est calculé par la formule Φ(x,y) = *ϕ̅ᵢⱼ*(x,y) ψ(y), i = 1 ... N/2, j = 1 ... M, où *ϕ̅ᵢⱼ* (x, y) est la fonction de phase d'une lentille de Fresnel axiale convexe centrée au point (xᵢ,yⱼ) et calculée par la formule *ϕ̅ᵢⱼ* (x,y) = C [(x-xᵢ)²+(y-yⱼ)²], où C est un paramètre négatif donné, et la fonction ψ(y) définie sur toute la zone Q est l'extension périodique de la fonction *ψ̅*(y) définie sur l'intervalle |y| ≤ T_{ψ}/2 de sorte que *ψ̅* (y) est égal à 1 si |y| ≤ Δ/2 et est égal 0 si lyl > Δ/2, où T_{ψ} et Δ sont des paramètres donnés tels que Δ/T_{ψ} ≤ ½, et la période T_{ϕ} des lentilles de Fresnel le long de l'axe Oy, qui est égal à T_{ϕ} = L_{y}/M, diffère de la période T_{ψ}, cependant par pas plus de 5 %, et si le système micro-optique est éclairé par une source lumineuse ponctuelle, alors à des angles de diffraction inférieurs à 60°, l'observateur voit dans les zones Q¹ et Q² des images constituées de bandes noires et blanches, qui ne changent pas lorsque l'élément optique est tourné à droite/gauche dans une plage d'angles de rotation comprise entre -15 ° < β < 15 ° et l'effet cinématique consiste en un mouvement de bandes noires et blanches lorsque l'élément optique est incliné vers le haut/bas dans une plage d'angles d'inclinaison comprise entre -30°< α < de 30° de sorte que les rayures dans les zones Q¹ et Q² se déplacent dans des directions opposées.

4. Le système micro-optique selon la revendication 3, qui diffère dans cette zone Q de l'élément optique où la fonction de phase (x,y) est égale à zéro est rempli de réseaux de diffraction de diverses orientations et de diverses périodes, qui ne dépassent pas 0,6 micron, ainsi lorsque le système micro-optique système est éclairé par une source lumineuse ponctuelle, à des angles de diffraction supérieurs à 60°, l'observateur voit une autre image couleur.

5. Le système micro-optique pour la formation d'images visuelles avec des effets cinématiques de mouvement sous la forme d'un élément optique à diffraction de phase réfléchissant plat caractérisé dans cette zone Q de l'élément optique, qui a la forme d'un rectangle, |x| ≤ Lₓ/2, |y| ≤ L_{y}/2, contient deux zones qui ne se chevauchent pas : zone Q¹ constitué des points (x,y) de la zone Q avec des coordonnées x positives et une zone Q² constitué des points (x,y) de la zone Q avec des coordonnées x négatives, et chacune des zones Q¹ et Q² est subdivisée en zones élémentaires Q¹ᵢⱼ et Q²ᵢⱼ avec des tailles ne dépassant pas 250 microns et centrées sur des points (xᵢ,yⱼ), i = 1 ... N/2, j = 1 ... M, où pour chaque zone Q¹ᵢⱼ un élément optique plat est calculé et fabriqué avec une fonction de phase Φ(x,y), qui au point (x,y) de la zone élémentaire Q¹ᵢⱼ est calculé par la formule Φ(x,y) = ϕᵢⱼ(x,y) · ψ₁(y), i = 1 ... N/2, j = 1 ... M, et pour chaque zone Q²ᵢⱼ un élément optique plat est calculé et fabriqué avec une fonction de phase Φ(x,y), qui au point (x,y) de la zone élémentaire Q²ᵢⱼ est calculé par la formule Φ(x,y) = ϕᵢⱼ(x,y) · ψ₂(y), i = 1 ... N/2, j = 1 ... M, où ϕ(x,y) est la fonction de phase de la lentille de Fresnel axiale centrée sur le point (xᵢ,yⱼ) et calculé par la formule ϕᵢⱼ(x,y) = C[(x-xᵢ)²+(y-yⱼ)²], où C est un paramètre donné et une fonction ψ₁(y) définie dans la zone Q¹ est l'extension périodique de la fonction *ψ̅*1(y) définie sur l'intervalle |y| ≤ T_{ψ1}/2 de sorte que *ψ̅*₁(y) est égal à 1 si |y| ≤ Δ₁/2 et vaut 0, si yl > Δ₁/2, et la fonction ψ₂(y) définie dans la zone Q² est l'extension périodique de la fonction *ψ̅*₂(y) définie sur l'intervalle |y| ≤ T_{ψ2}/2 de sorte que *ψ̅*₂(y) est égal à 1 si |y| ≤ Δ₂/2 et vaut 0 si y| > Δ₂/2, où T_{ψ1}, T_{ψ2}, Δ₁ et Δ₂ sont des paramètres donnés tels que Δ₁/T_{ψ1} ≤ ½, Δ₂/T_{ψ2} ≤ ½, et la période T_{ϕ} des lentilles de Fresnel le long de l'axe Oy, qui est égal à T_{ϕ} = L_{y}/M, diffère des périodes T_{ψ1} et T_{ψ2}, cependant par pas plus de 5%, et les quantités (T_{ϕ} - T_{ψ1)} et (T_{ϕ} - T_{ψ2}) ont des signes opposés, dans lesquels, lorsque le système micro-optique est éclairé par une source lumineuse ponctuelle, à des angles de diffraction inférieurs à 60 ° l'observateur voit dans les zones Q¹ et Q² des images constituées de bandes noires et blanches, qui ne changent pas lorsque l'élément optique est tourné à droite/gauche dans une plage d'angles comprise de rotation entre -15 °< β < 15 °, l'effet cinématique consiste en un mouvement de bandes noires et blanches lorsque l'élément optique est incliné vers le haut/bas dans une plage d'angles d'inclinaison comprise entre -30 °< α < 30 ° avec les rayures dans les zones Q¹ et Q² se déplaçant dans des directions opposées.

6. Le système micro-optique selon la revendication 5 qui diffère dans cette zone Q de l'élément optique où la fonction de phase Φ(x,y) est égale à zéro est remplie de de réseaux de diffraction d'orientations diverses et de périodes diverses, qui ne dépassent pas 0,6 micron, et lorsque le système micro-optique est éclairé par une source lumineuse ponctuelle, dans ce cas, à des angles de diffraction supérieurs à 60 ° l'observateur voit une autre image couleur.
